(19)

Europäisches
Patentamt
European
Patent Office
Office européen
des brevets

(11) **EP 3 253 101 A1**

(12) **EUROPEAN PATENT APPLICATION**

(43) Date of publication:
06.12.2017 Bulletin 2017/49

(51) Int Cl.:
*H04W 16/20* (2009.01)   *H04W 24/02* (2009.01)

(21) Application number: 17170634.4

(22) Date of filing: 11.05.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 30.05.2016   CN 201610371004

(71) Applicant: **Fujitsu Limited**
**Kawasaki-shi, Kanagawa 211-8588 (JP)**

(72) Inventors:
• **LI, Hongchun**
  **Chaoyang District, Beijing 100027 (CN)**
• **TIAN, Jun**
  **Chaoyang District, Beijing 100027 (CN)**

(74) Representative: **Haseltine Lake LLP**
**Lincoln House, 5th Floor**
**300 High Holborn**
**London WC1V 7JH (GB)**

(54) **METHOD AND APPARATUS FOR WIRELESS NETWORK DEPLOYMENT AND TERMINAL DEVICE**

(57)   Embodiments of this disclosure provide a method and apparatus for wireless network deployment and terminal device. The method includes: selecting a node needing to be currently deployed according to planned network information and deployed network information; calculating deployment quality of the node needing to be currently deployed at multiple test positions; and selecting a test position of highest deployment quality as a deployment position of the node needing to be currently deployed. With the embodiments of this disclosure, deployment quality of an actual deployment position of a wireless network node may be evaluated, such that actual deployment satisfies a requirement on network planning.

FIG. 6

EP 3 253 101 A1

**Description**

This disclosure relates to the field of communication technologies, and in particular to a method and apparatus for wireless network deployment and terminal device.

As progress of communication technologies and population of intelligent mobile devices, wireless networks achieve a rapid development, which not only bring convenience to people's lives, but also change styles of people's production and lives.

In comparison with wired networks, wireless networks have less requirements on infrastructural installations, and may be deployed more flexibly and conveniently. However, specific problems of deployment of wireless networks need to be solved. For example, devices in the wireless networks need no cables in communication, and achieve the communication by using electromagnetic waves. As electromagnetic waves have a broadcast characteristic, a signal transmitted by a device may be received by all devices within the communication range. Hence, propagation of electromagnetic waves is prone to be affected by environmental factors, such as a blockage, which may lower strength of the electromagnetic waves. Furthermore, as electromagnetic waves are invisible, connection relationships between devices cannot be directly observed in deploying nodes.

It should be noted that the above description of the background is merely provided for clear and complete explanation of this disclosure and for easy understanding by those skilled in the art. And it should not be understood that the above technical solution is known to those skilled in the art as it is described in the background of this disclosure.

It was found by the inventors that the broadcast characteristic, being prone to be affected by environment and invisibility, of electromagnetic waves bring uncertainty to deployment of wireless networks, and whether deployed networks are stable and whether deployed networks satisfy demands of users are hard to be confirmed. In a multi-hop network, such a problem is even severe, as a routing device in the multi-hop network will forward data for other devices, thereby making the network structure more complex.

Existing wireless network deployment technologies are mainly concentrated on network planning before the deployment and measurement of wireless link conditions during the deployment. Embodiments of this disclosure provide a method and apparatus for wireless network deployment and terminal device, which are capable of supporting a multi-hop wireless network and may be used in an actual deployment scenario, so as to evaluate deployment quality of an actual deployment position of a wireless network node, such that actual deployment satisfies a requirement on network planning.

According to a first aspect of an embodiment, there is provided an apparatus for wireless network deployment, including:

  a first storage unit configured to store planned network information;
  a second storage unit configured to store deployed network information;
  a deployment node selecting unit configured to select a node needing to be currently deployed according to the planned network information and the deployed network information;
  a deployment quality calculating unit configured to calculate deployment quality of the node needing to be currently deployed at multiple test positions; and
  a deployment position selecting unit configured to select a test position of highest deployment quality as a deployment position of the node needing to be currently deployed.

According to a second aspect of an embodiment, there is provided a terminal device including the apparatus as described in the first aspect.

According to a third aspect of an embodiment, there is provided a method for wireless network deployment, including:

  a node needing to be currently deployed is selected according to planned network information and deployed network information;
  deployment quality of the node needing to be currently deployed at multiple test positions is calculated; and
  a test position of highest deployment quality is selected as a deployment position of the node needing to be currently deployed.

It is desirable if deployment quality of an actual deployment position of a wireless network node may be evaluated, such that actual deployment satisfies a requirement on network planning.

With reference to the following description and drawings, the particular embodiments are disclosed in detail, and the principles of this disclosure and the manners of use are indicated. It should be understood that the scope of the embodiments of this disclosure is not limited thereto. The embodiments of this disclosure contain many alternations, modifications and equivalents within the scope of the terms of the appended claims. The claims define the scope of the invention

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of this disclosure, which constitute a part of the specification and illustrate the exemplary embodiments of this disclosure, and are used for setting forth the principles of this disclosure together with the description. It is clear and understood that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of an apparatus for wireless network deployment of Embodiment 1;
FIG. 2 is a schematic diagram of an example of a planned network;
FIG. 3 is a schematic diagram of an example of a deployed network;
FIG. 4 is a schematic diagram of an example of a deployment node selecting unit;
FIG. 5 is a schematic diagram of an example of calculating deployment quality;
FIG. 6 is a schematic diagram of an example of selecting a deployment node;
FIG. 7 is a schematic diagram of an example of a deployment process;
FIG. 8 is a schematic diagram of a terminal device of Embodiment 2;
FIG. 9 is a schematic diagram of a systematic diagram of the terminal device of Embodiment 2; and
FIG. 10 is a schematic diagram of a method for wireless network deployment of Embodiment 3.

These and further aspects and features will be apparent with reference to the following description and attached drawings. In the description and drawings, particular embodiments have been disclosed in detail as being indicative of some of the ways in which the principles may be employed, but it is understood that the disclosure is not limited correspondingly in scope. Rather, the disclosure includes all changes, modifications and equivalents coming within the terms of the appended claims.

The embodiments are described below with reference to the accompanying drawings.

Embodiment 1

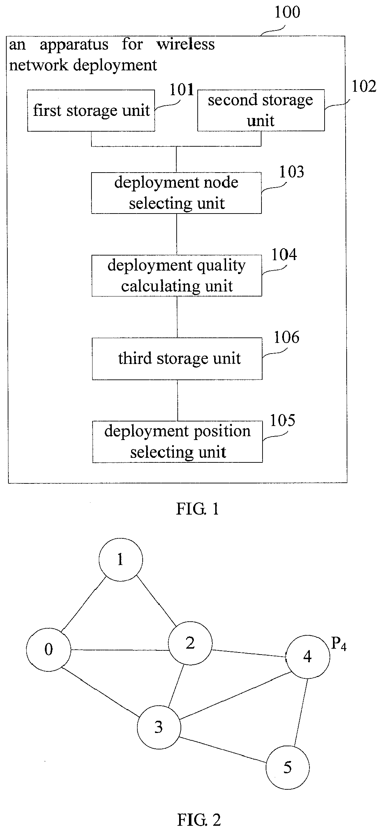

An embodiment of this disclosure provides an apparatus for wireless network deployment. FIG. 1 is a schematic diagram of the apparatus. Referring to FIG. 1, the apparatus 100 includes: a first storage unit 101, a second storage unit 102, a deployment node selecting unit 103, a deployment quality calculating unit 104 and a deployment position selecting unit 105. The first storage unit 101 is configured to store planned network information, the second storage unit 102 is configured to store deployed network information, the deployment node selecting unit 103 is configured to select a node needing to be currently deployed according to the planned network information and the deployed network information, the deployment quality calculating unit 104 is configured to calculate deployment quality of the node needing to be currently deployed at multiple test positions, and the deployment position selecting unit 105 is configured to select a test position of highest deployment quality as a deployment position of the node needing to be currently deployed.

In this embodiment, the planned network information stored by the first storage unit 101 is a design result of the wireless network. The second storage unit 102 stores information on network after deployment. A wireless network contains multiple nodes, and in deploying the network, the nodes need to be respectively deployed and mounted in a certain order. The deployment node selecting unit 103 selects a node needing to be currently deployed according to the planned network information and the deployed network information. The deployment quality calculating unit 104 evaluates deployment quality of the node at multiple positions. And the deployment position selecting unit 105 selects an optimal deployment position of the node according to deployment quality of the node at the positions.

With the apparatus of this embodiment, the deployment quality of the actual deployment position of the wireless network node may be evaluated, such that the actual deployment satisfies a requirement on network planning.

The components of the apparatus 100 for wireless network deployment of this embodiment shall be described below respectively.

In this embodiment, the first storage unit 101 stores planed information on network, briefly referred to as planned network information, and the planned network information is information on a network expected to be deployed. Before network deployment, according to information on demands of users, a deployment environment, and a node performance, etc., the planned network information is generated by manually designing the network or automatically planning the network by planning software, the planned network information may include an address, a position, and connection relationships, etc., of a node in the network. The address of the node is an index used for uniquely identifying the node. The position of the node is used for indicating an expected position of node deployment, which may be an accurate position coordinate, or several alternative position coordinates, or a deployment range. The connection relationships of the node are requirements on performance of wireless links between a node and other nodes in a process of network planning. A connection relationship between a node and another node may be expressed by quality of a link between them, or a packet reception ratio of a wireless link between them, or other single or complex indices. Table 1 shows an example of the planned network information.

Table 1

| Node address | Deployment position | Neighboring node address | Link quality |
|---|---|---|---|
| $N_i$ | $P_i$ | $NN_{i,1}$ | $L_{i,1}$ |
| | | $NN_{i,2}$ | $L_{i,2}$ |
| | | ... | ... |
| | | $NN_{i,m}$ | $L_{i,m}$ |

As shown in Table 1, the planned network information includes a node address, a deployment position, a neighboring node address, and link quality, etc., where, $P_i$ is a coordinate of a deployment position of a node $N_i$, $NN_{i,j}$ is a neighboring node of the node Ni, and $1 \leq j \leq m$, m being the number of planned neighboring nodes of the node Ni. Quality of link between nodes in Table 1 is used to express a connection relationship therebetween; where, $L_{i,j}$ is quality of a link between the node $N_i$ and its neighboring node $NN_{i,j}$.

FIG. 2 is an example of the planned network. As shown in FIG. 2, the planned network consists of six nodes, connection lines between the nodes denoting that the nodes are mutually neighboring nodes, that is, they may communicate directly. Hence, in FIG. 2, neighboring nodes of node 1 are node 0 and node 2, neighboring nodes of node 2 are node 0, node 1, node 3 and node 4, and so on. Table 2 is an example of planned network information of node 4 in FIG. 2.

Table 2

| Node address | Deployment position | Neighboring node address | Link quality |
|---|---|---|---|
| 4 | $P_4$ | 2 | $L_{4,2}$ |
| | | 3 | $L_{4,3}$ |
| | | 5 | $L_{4,5}$ |

As shown in Table 2, the address of the node is 4, the deployment position is $P_4$, its neighboring nodes are nodes 2, 3 and 5, and quality of links between it and its neighboring nodes is $L_{4,2}$, $L_{4,3}$ and $L_{4,5}$, respectively.

In this embodiment, the second storage unit 102 stores and administrates information on deployed nodes in the network, briefly referred to as deployed network information. Actually measured qualities of links, between a node after deployment and other deployed nodes, etc., belong to the deployed network information. Table 3 shows an example of the deployed network information.

Table 3

| Node address | Deployment position | Neighboring node address | Link quality |
|---|---|---|---|
| $N_i$ | $P_i'$ | $NN_{i,1}'$ | $L_{i,1}'$ |
| | | $NN_{i,2}'$ | $L_{i,2}'$ |
| | | ... | ... |
| | | $NN_{i,m'}'$ | $L_{i,m'}'$ |

Similar to Table 2, Table 3 includes a node address, a deployment position, a neighboring node address, and link quality. However, Table 2 is a table of the planned network information, in which the information is obtained by designing and planning, and is a target of network deployment. Table 3 is a table of the deployed network information, in which the information is obtained by actual measurement after the network node deployment, and is a result after the network deployment. In Table 3, $N_i$ is the address of the node, $P_i'$ is the deployment position of the node, $NN_{i,j}'$ is an address of a neighboring node of the node, and $L_{i,j}'$ is quality of a link between the node and the neighboring node; where, 1 < j < m', m' being the number of neighboring nodes of the node $N_i$ after the deployment.

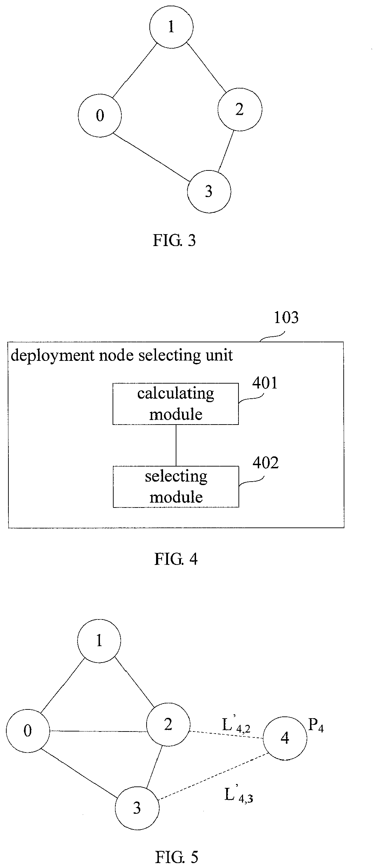

FIG. 3 is an example of the deployed network, which corresponds to the planned network in FIG. 2. The number of the nodes in the deployed network shown in FIG. 3 is less than that of the nodes in the planned network shown in FIG. 2, because the process of network deployment has not been finished completely, and node 4 and node 5 need to be deployed. As the deployed network is limited by an actual environment, and there possibly exist differences between connection relationships between nodes in the deployed network and that in a planned network. For example, in the planned network shown in FIG. 2, node 0 and node 2 are mutually neighboring nodes, and may communicate directly; however, in the deployed network shown in FIG. 3, node 0 and node 2 cannot communicate directly. It is normal in network deployment that there exist differences between connection relationships between nodes in a planned network and that in a deployed network. In a case where a planned network and a deployed network have different connection relationships, it needs to ensure that the planned network and the deployed network have identical performance, such as a packet reception ratio.

Table 4 is an example of the deployment information of node 2 in the deployed network shown in FIG. 3. As shown in FIG. 3, node 2 has two neighboring nodes, which are node 1 and node 3, respectively. Quality of a link between node 2 and node 1 is $L_{2,1}'$, and quality of a link between node 2 and node 3 is $L_{2,3}'$.

Table 4

| Node address | Deployment position | Neighboring node address | Link quality |
|---|---|---|---|
| 2 | $P_2'$ | 1 | $L_{2,1}'$ |
| | | 3 | $L_{2,3}'$ |

According to FIG. 3, deployment information of other nodes (node 0, node 1 and node 3) may be obtained, description of which being omitted herein.

In this embodiment, as a wireless network contains multiple nodes, in deploying the network, the nodes need to be respectively deployed and mounted in a certain order. The deployment node selecting unit 103 may select a node needing to be currently deployed according to the planned network information and the deployed network information. FIG. 3 shows a deployed network corresponding to the planned network shown in FIG. 2, in which deployment of node 4 and node 5 has not been finished. The deployment node selecting unit 103 may select a node for deployment from the nodes of which deployment has not been finished. Hence, for the networks shown in FIGs. 2 and 3, the deployment node selecting unit 103 will determine an order of deployment of node 4 and node 5.

In an implementation, the deployment node selecting unit 103 selects a node of a maximum planned connection level with the deployed nodes from undeployed nodes as the node needing to be currently deployed. The planned connection level here refers to a sum of the number of nodes in all the deployed nodes having a planned connection relationship with each undeployed node.

FIG. 4 is a schematic diagram of an implementation of the deployment node selecting unit 103. As shown in FIG. 4, in this implementation, the deployment node selecting unit 103 includes a calculating module 401 and a selecting module 402. The calculating module 401 calculates planned connection levels between each undeployed node and all deployed nodes, and the selecting module 402 selects a node of a maximum planned connection level with the deployed nodes from undeployed nodes as the node needing to be currently deployed.

In this implementation, the calculating module 401 may calculate the planned connection levels between each undeployed node and all deployed nodes according to formula (1) below, and the selecting module 402 may select the node of a maximum planned connection level with the deployed nodes from the undeployed nodes as the node needing to be currently deployed according to formula (2) below:

$$D_i = \sum_{N_j \in N'} l_{i,j} \qquad (1),$$

$$N_x = \arg\max_{N_i \in N/N'} D_i \qquad (2).$$

In formulae (1) and (2), N is a set of all the planned nodes, N' is a set of all the deployed nodes, N/N' is a set of all the undeployed nodes, $l_{i,j}$ is a planned connection relationship between a node $N_i$ and a node $N_j$, $D_i$ is a planned connection level between the node $N_i$ and all the deployed nodes (a deployed network N'), and $N_x$ is the node needing to be currently deployed.

In an implementation, if the node $N_i$ and the node $N_j$ are neighboring nodes in the planned network, $l_{i,j}$ is 1; otherwise, $l_{i,j}$ is 0. Taking the planned network shown in FIG. 2 and the deployed network shown in FIG. 3 as examples, in the networks to which FIG. 2 and FIG. 3 correspond, the set of all the planned nodes is N={0,1,2,3,4,5}, the set of all the deployed nodes is N'={0,1,2,3}, and the set of all the undeployed nodes is N/N'={4,5}. According to the calculation of the calculating module 401, the connection level between the node 4 and the deployed nodes is $D_4$=2, since the node 4 and the deployed nodes 2 and 3 are neighboring nodes in the planned network; and the connection level between the node 5 and the deployed nodes is $D_5$=1, since the node 5 and the deployed node 3 are neighboring nodes in the planned network. Hence, the selecting module 402 may select a node of a maximum planned connection level with the deployed nodes from the nodes 4 and 5, hence, $N_x$=4, that is, the node needing to be currently deployed is the node 4.

In another implementation, $l_{i,j}$=min($L_{i,j}$/$L_{stable}$, 1); where, $L_{i,j}$ denotes quality of a link between the node $N_i$ and the node $N_j$, and $L_{stable}$ is link quality of a stable link. That is, in calculating the planned connection relationship $l_{i,j}$ between the node $N_i$ and the node $N_j$, link quality of a wireless link is taken into account.

In this embodiment, after the node needing to be currently deployed is determined, the deployment quality calculating unit 104 may calculate the deployment quality of the node at multiple test positions. For example, for each test position, the deployment quality calculating unit 104 may evaluate deployment quality of the node at the test position by comparing a difference between deployment information of the node at the test position and planned information of the node. At a certain test position, the closer the deployment information of the node and its planned information is, the higher the deployment quality of the node at this test position is; otherwise, the lower the deployment quality is.

In this embodiment, the deployment quality is inversely proportional to a difference between the link quality in the planned network and the link quality in the deployed network, or the deployment quality is proportional to the number of deployed neighboring nodes in the planned neighboring nodes; or the deployment quality is inversely proportional to the difference between the link quality in the planned network and the link quality in the deployed network, and is proportional to the number of deployed neighboring nodes in the planned neighboring nodes.

In an implementation, the deployment quality calculating unit 104 may calculate a weighted sum of distances between the planned quality of the links between the node and all the deployed nodes and the deployed quality of the links between the node and all the deployed nodes, and divide the number of the deployed neighboring nodes in the planned neighboring nodes by the weighted sum of the distances, so as to obtain the deployment quality of the node at the current test position, which is as shown in formula (3) below:

$$Q_i = \frac{\left| B_i \cap B_i' \right|}{\sum_{N_j \in N'} k_j d(L_{i,j}, L_{i,j}')} ;$$

In formula (3), $Q_i$ is deployment quality of a node $N_i$ at a position, the larger a value of $Q_i$ is, the higher the deployment quality is, otherwise, the smaller a value of $Q_i$ is, the lower the deployment quality is. $N'$ is a set of all the deployed nodes, $B_i$ is a set of neighboring nodes of the node $N_i$ in the planned network, that is, the set of the planned neighboring nodes of the node $N_i$, $B_i'$ is a set of neighboring nodes of the node $N_i$ in the deployed network, that is, the set of the deployed neighboring nodes of the node $N_i$, $L_{i,j}$ is the quality of the link between the node $N_i$ and the node $N_j$ in the planned network, $L_{i,j}'$ is the quality of the link between the node $N_i$ and the node $N_j$ in the deployed network, d() is a function for calculating a distance, $| \cdot |$ is the number of elements in a set, and $k_j$ is a weight, $k_j \geq 0$. When two nodes are not neighboring nodes, quality of a link between them needs to be processed specially. For example, if a packet reception ratio is used to evaluate quality of a link, a packet reception ratio between nonneighboring nodes is 0; and if a signal strength is used to evaluate quality of a link, a signal strength between nonneighboring nodes is a value less than a reception sensitivity.

According to formula (3), the deployment quality calculating unit 104 may obtain the deployment quality of the node needing to be currently deployed at each test position through calculation.

FIG. 5 is an example of calculating the deployment quality, a planned network to which it corresponds being the planned network shown in FIG. 2. As shown in FIG. 5, the node 0, node 1, node 2 and node 3 are deployed nodes, hence, the set of deployment nodes is N'={0,1,2,3,}. The node 4 is a node that is being deployed, and deployment quality of this node at the current position needs to be calculated. According to FIG. 2 and Table 2, in the planned network, the neighboring nodes of the node 4 are the node 2, node 3 and node 5, that is, $B_4$={2,3,5}, and corresponding quality of links is $L_{4,2}$, $L_{4,3}$ and $L_{4,5}$, respectively; and according to FIG. 5, in the deployed network, the neighboring nodes of the node 4 are the node 2 and node 3, that is, $B_4'$={2,3}, and corresponding quality of links is $L'_{4,2}$ and $L'_{4,3}$, respectively. The deployment quality of the node 4 obtained according to formula (3) is:

$$Q_4 = \frac{2}{k_0 d(L_{4,0}, L'_{4,0}) + k_1 d(L_{4,1}, L'_{4,1}) + k_2 d(L_{4,2}, L'_{4,2}) + k_3 d(L_{4,3}, L'_{4,3})} \qquad (4).$$

As the node 4 and the nodes 0 and 1 are nonneighboring nodes both in the planned network and the deployed network, in formula (4), $d(L_{4,0}, L'_{4,0})$=0, and $d(L_{4,1}, L'_{4,1})$=0.

In this embodiment, after the deployment quality calculating unit 104 evaluates the deployment quality of the node needing to be currently deployed at multiple test positions, the deployment position selecting unit 105 may select an optimal position from these test positions and take it as the deployment position of the node. In an implementation, the deployment position selecting unit 105 may select a test position of highest deployment quality from the multiple test positions as the deployment position of the node.

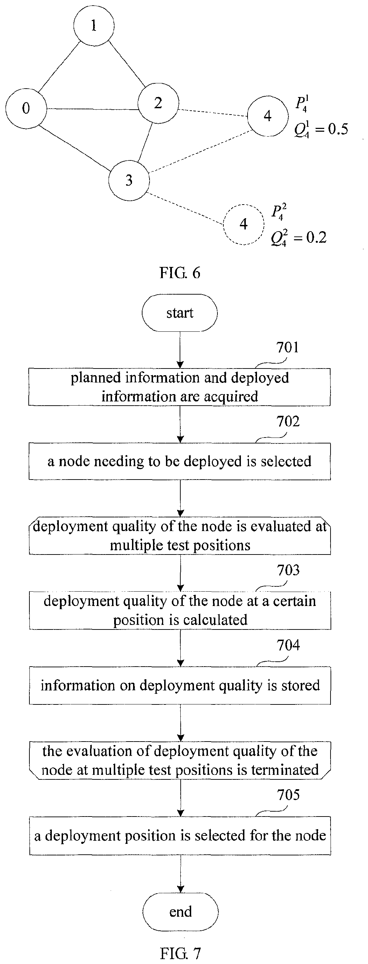

FIG. 6 is an example of selecting the deployment position, a planned network to which it corresponds being the planned network shown in FIG. 2. As shown in FIG. 6, the node 4 is a node that is being deployed, and deployment quality is evaluated respectively at a test position $P_4^1$ and a test position $P_4^2$; at the test position $P_4^1$, the deployment quality of the node 4 is $Q_4^1 = 0.5$, and at the test position $P_4^2$, the deployment quality of the node 4 is $Q_4^2 = 0.2$. Hence, the deployment position selecting unit 105 selects a test position of highest deployment quality, i.e. $P_4^1$, as the deployment position of the node 4.

In this embodiment, deployment quality of the node at different test positions may be stored. As shown in FIG. 1, the apparatus 100 may further include:

a third storage unit 106 configured to store a calculation result of the deployment quality calculating unit 104, the calculation result including: an address of the node needing to be currently deployed, multiple test positions corresponding to the node needing to be currently deployed, and deployment quality of the node needing to be currently deployed at each test position.

In this embodiment, in deploying the network, deployment quality of the node needs to be evaluated at different test positions, and the third storage unit 106 may store the deployment quality of the node at different test positions. Hence, the deployment position selecting unit 105 may select the deployment position for the node needing to be currently deployed according to information stored in the third storage unit 106.

Table 5 is an example of the deployment quality stored in the third storage unit 106.

Table 5

| Node address | Test position | Deployment quality |
|---|---|---|
| $N_i$ | $P_i^1$ | $Q_i^1$ |
| | ... | ... |
| | $P_i^n$ | $Q_i^n$ |

As shown in Table 5, $N_i$ is an address of a node, $P_i^k$ is a test position where the node $N_i$ is attempted to be deployed, $1 \leq k \leq n$, and $Q_i^k$ is deployment quality of the node $N_i$ at the test position $P_i^k$, $1 \leq k \leq n$, the deployment quality being obtained by the deployment quality calculating unit 104 through calculation.

The apparatus 100 of this embodiment shall be described below with reference to a process of deployment of a node.

FIG. 7 is a schematic diagram of an example of a process of deployment of a node by using the apparatus 100 of this embodiment. As shown in FIG. 7, the process includes:

> step 701: planned information and deployed information are acquired;
> step 702: a node needing to be deployed is selected;
> step 703: deployment quality of the node at a certain position is calculated;
> step 704: information on deployment quality is stored; and
> step 705: a deployment position is selected for the node.

In step 701, the planned information and deployed information of the network are acquired first respectively from the first storage unit 101 and the second storage unit 102. The planned network information is information on the number of nodes expected to be deployed, and connection relationships between nodes, etc. (refer to Table 1 for details), and the deployed network information is information on a deployed network (refer to Table 3 for details), and if the network has not been deployed, the deployed network information is empty.

In step 702, the deployment node selecting unit 103 selects a node $N_x$ for deployment from undeployed nodes according to the planned network information and the deployed network information.

In deploying the node, deployment quality of the node $N_x$ needs to be tested at multiple test positions $P_i$, $P_i \in \{P_1,...,P_n\}$.

In step 703, for each test position Pi, $P_i \in \{P_1,...,P_n\}$, the deployment quality calculating unit 104 may calculate the deployment quality $Q_i$ of the node $N_x$ at the test position, i being from 1 to n.

In step 704, the third storage unit 106 may store a calculation result of the deployment quality calculating unit 104, that is, the deployment quality $Q_i$ of the node Nx at each test position $P_i$, including $N_x$, $P_i$ and $Q_i$ (refer to Table 5 for details).

In step 705, the deployment position selecting unit 105 may select a test position of highest deployment quality from the multiple test positions, according to the information on the deployment quality stored in the third storage unit 106, as the deployment position of the node $N_x$.

With the apparatus of the embodiment of this disclosure, the deployment quality of an actual deployment position of the wireless network node may be evaluated, such that actual deployment satisfies a requirement on network planning.

Embodiment 2

An embodiment of this disclosure provides a terminal device, including the apparatus for wireless network deployment described in Embodiment 1.

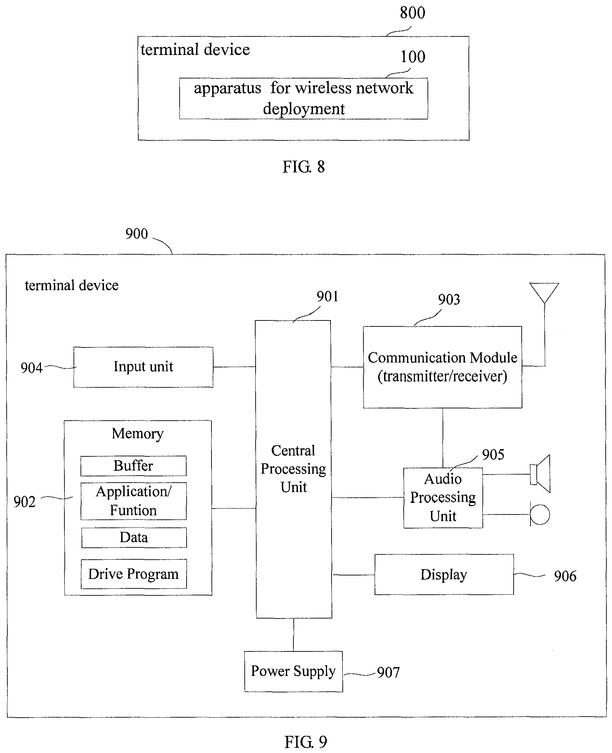

FIG. 8 is a schematic diagram of the terminal device. As shown in FIG. 8, the terminal device 800 includes an apparatus 100 for wireless network deployment, the apparatus 100 being configured to: select a node needing to be currently deployed according to planned network information and deployed network information; calculate deployment quality of the node needing to be currently deployed at multiple test positions; and select a test position of highest deployment quality as a deployment position of the node needing to be currently deployed. As the apparatus 100 for wireless network deployment has been described in detail in Embodiment 1, its contents are incorporated herein, which shall not be described herein any further.

FIG. 9 is a schematic diagram of a systematic diagram of the terminal device of this embodiment. As shown in FIG. 9, the terminal device 900 may include a central processing unit 901 and a memory 902, the memory 902 being coupled to the central processing unit 901. It should be noted that this figure is illustrative only, and other types of structures may also be used, so as to supplement or replace this structure and achieve a telecommunications function or other functions.

In an implementation, the functions of the apparatus 100 for wireless network deployment described in Embodiment 1 may be integrated into the central processing unit 901. For example, the central processing unit 901 may be configured to: select a node needing to be currently deployed according to planned network information and deployed network information; calculate deployment quality of the node needing to be currently deployed at multiple test positions; and select a test position of highest deployment quality as a deployment position of the node needing to be currently deployed.

In another implementation, the apparatus 100 for wireless network deployment described in Embodiment 1 and the central processing unit 901 may be configured separately. For example, the apparatus 100 may be configured as a chip connected to the central processing unit 901, with its functions being realized under control of the central processing unit 901.

As shown in FIG. 9, the terminal device 900 may further include a communication module 903, an input unit 904, an audio processor 905, a display 906 and a power supply 907. It should be noted that the terminal device 900 does not necessarily include all the parts shown in FIG. 9, and furthermore, the terminal device 900 may include parts not shown in FIG. 9, and the prior art may be referred to.

As shown in FIG. 9, the central processing unit 901 is sometimes referred to as a controller or control, and may include a microprocessor or other processor devices and/or logic devices. The central processing unit 901 receives input and controls operations of every components of the terminal device 900.

In this embodiment, the memory 902 may be, for example, one or more of a buffer memory, a flash memory, a hard drive, a mobile medium, a volatile memory, a nonvolatile memory, or other suitable devices, which may store the above planned network information and deployed network information, and may further store a program executing related information. And the central processing unit 901 may execute the program stored in the memory 902, so as to realize information storage or processing, etc. Functions of other parts are similar to those of the prior art, which shall not be described herein any further. The parts of the terminal device 900 may be realized by specific hardware, firmware, software, or any combination thereof, without departing from the scope of the present disclosure.

With the terminal device of the embodiment of this disclosure, the deployment quality of an actual deployment position of the wireless network node may be evaluated, such that actual deployment satisfies a requirement on network planning.

Embodiment 3

An embodiment of this disclosure provides a method for wireless network deployment. As principles of the method for solving problems are similar to that of the apparatus of Embodiment 1, the implementation of the apparatus of Embodiment 1 may be referred to for implementation of the method, with identical contents being not going to be described herein any further.

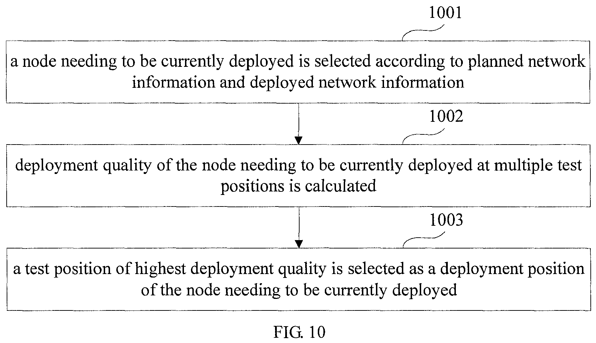

FIG. 10 is a flowchart of an implementation of the method for wireless network deployment of this embodiment. Referring to FIG. 10, the method includes:

step 1001: a node needing to be currently deployed is selected according to planned network information and deployed network information;
step 1002: deployment quality of the node needing to be currently deployed at multiple test positions is calculated; and
step 1003: a test position of highest deployment quality is selected as a deployment position of the node needing to be currently deployed.

In this embodiment, the planned network information is information on a planned network and includes a node address, a deployment position and connection relationships, and the deployed network information is information on a deployed network, and includes a node address, a deployment position and connection relationships. Embodiment 1 may be referred to for details, which shall not be described herein any further.

In this embodiment, in step 1001, planned connection levels between each undeployed node and all deployed nodes may be calculated first, and then a node of a maximum planned connection level with the deployed nodes is selected from undeployed nodes as the node needing to be currently deployed. In this embodiment, the planned connection level refers to a sum of the number of nodes in all the deployed nodes having a planned connection relationship with each undeployed node.

In this embodiment, the deployment quality is inversely proportional to a difference between link quality in a planned network and link quality in a deployed network, and/or the deployment quality is proportional to the number of deployed neighboring nodes in planned neighboring nodes.

In an implementation of step 1002, the deployment quality of the node needing to be currently deployed at each test position may be calculated according to a formula below:

$$Q_i = \frac{\left| B_i \bigcap B_i^{'} \right|}{\sum_{N_j \in N'} k_j d(L_{i,j}, L_{i,j}^{'})} ;$$

where, $Q_i$ is deployment quality of a node $N_i$ at a test position, $N'$ is a set of all the deployed nodes, $B_i$ is a set of neighboring nodes of the node $N_i$ in the planned network, $B_i'$ is a set of neighboring nodes of the node $N_i$ in the deployed network, $L_{i,j}$ is quality of a link between the node $N_i$ and a node $N_j$ in the planned network, $L_{i,j}'$ is quality of a link between the node $N_i$ and the node $N_j$ in the deployed network, d() is a function for calculating a distance, $| \cdot |$ is the number of elements in a set, and $k_j$ is a weight, $k_j \geq 0$.

In this embodiment, the above planned network information, deployed network information and the above information on deployment quality may be stored in a storing unit.

With the method of the embodiment of this disclosure, the deployment quality of an actual deployment position of the wireless network node may be evaluated, such that actual deployment satisfies a requirement on network planning.

An embodiment of the present disclosure further provides a computer readable program code, which, when executed in terminal device, will cause the terminal device to carry out the method as described in Embodiment 3.

An embodiment of the present disclosure further provides a computer readable medium, including a computer readable program code, which will cause terminal device to carry out the method as described in Embodiment 3.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

For implementations of the present disclosure containing the above embodiments, following supplements are further disclosed.

Supplement 1. An apparatus for wireless network deployment, comprising:

> a first storage unit configured to store planned network information;
> a second storage unit configured to store deployed network information;
> a deployment node selecting unit configured to select a node needing to be currently deployed according to the planned network information and the deployed network information;
> a deployment quality calculating unit configured to calculate deployment quality of the node needing to be currently deployed at multiple test positions; and
> a deployment position selecting unit configured to select a test position of highest deployment quality as a deployment position of the node needing to be currently deployed.

Supplement 2. The apparatus according to supplement 1, wherein,
the planned network information is information on a planned network and includes a node address, a deployment position and connection relationships;
and the deployed network information is information on a deployed node and includes a node address, a deployment position and connection relationships.

Supplement 3. The apparatus according to supplement 1, wherein the deployment node selecting unit includes:

> a calculating module configured to calculate planned connection levels between each undeployed node and all deployed nodes; and
> a selecting module configured to select a node of a maximum planned connection level with the deployed nodes from undeployed nodes as the node needing to be currently deployed.

Supplement 4. The apparatus according to supplement 3, wherein the planned connection level refers to a sum of the number of nodes in all the deployed nodes having a planned connection relationship with each undeployed node.

Supplement 5. The apparatus according to supplement 1, wherein the deployment quality is inversely proportional to a difference between link quality in a planned network and link quality in a deployed network, and/or the deployment quality is proportional to the number of deployed neighboring nodes in planned neighboring nodes.

Supplement 6. The apparatus according to supplement 5, wherein the deployment quality calculating unit calculates the deployment quality of the node needing to be currently deployed at each test position according to a formula below:

$$Q_i = \frac{\left| B_i \cap B_i^{'} \right|}{\sum_{N_j \in N'} k_j d(L_{i,j}, L_{i,j}^{'})};$$

where, $Q_i$ is deployment quality of a node $N_i$ at a test position, $N'$ is a set of all the deployed nodes, $B_i$ is a set of neighboring nodes of the node $N_i$ in the planned network, $B_i'$ is a set of neighboring nodes of the node $N_i$ in the deployed network, $L_{i,j}$ is quality of a link between the node $N_i$ and a node $N_j$ in the planned network, $L_{i,j}'$ is quality of a link between the node $N_i$ and the node $N_j$ in the deployed network, d() is a function for calculating a distance, $| \cdot |$ is the number of elements in a set, and $k_j$ is a weight, $k_j \geq 0$.

Supplement 7. The apparatus according to supplement 6, wherein the apparatus further includes:

> a third storage unit configured to store a calculation result of the deployment quality calculating unit, the calculation result including: an address of the node needing to be currently deployed, multiple test positions corresponding to the node needing to be currently deployed, and deployment quality of the node needing to be currently deployed at each test position.

Supplement 8. Terminal device, including the apparatus as described in supplement 1.

Supplement 9. A method for wireless network deployment, including:

> selecting a node needing to be currently deployed according to planned network information and deployed network information;
> calculating deployment quality of the node needing to be currently deployed at multiple test positions; and
> selecting a test position of highest deployment quality as a deployment position of the node needing to be currently deployed.

Supplement 10. The method according to supplement 9, wherein the planned network information is information on a planned network and includes a node address, a deployment position and connection relationships; and the deployed network information is information on a deployed node and includes a node address, a deployment position and connection relationships.

Supplement 11. The method according to supplement 9, wherein the calculating deployment quality of the node needing to be currently deployed at multiple test positions includes:

> calculating planned connection levels between each undeployed node and all deployed nodes; and
> selecting a node of a maximum planned connection level with the deployed nodes from undeployed nodes as the node needing to be currently deployed.

Supplement 12. The method according to supplement 11, wherein the planned connection level refers to a sum of the number of nodes in all the deployed nodes having a planned connection relationship with each undeployed node.

Supplement 13. The method according to supplement 9, wherein the deployment quality is inversely proportional to a difference between link quality in a planned network and link quality in a deployed network, and/or the deployment quality is proportional to the number of deployed neighboring nodes in planned neighboring nodes.

Supplement 14. The method according to supplement 13, wherein the deployment quality of the node needing to be currently deployed at each test position is calculated according to a formula below:

$$Q_i = \frac{\left| B_i \bigcap B_i' \right|}{\sum_{N_j \in N'} k_j d(L_{i,j}, L_{i,j}')};$$

where, $Q_i$ is deployment quality of a node $N_i$ at a test position, $N'$ is a set of all the deployed nodes, $B_i$ is a set of neighboring nodes of the node $N_i$ in the planned network, $B_i'$ is a set of neighboring nodes of the node $N_i$ in the deployed network, $L_{ij}$ is quality of a link between the node $N_i$ and a *node $N_j$* in the planned network, $L_{i,j}'$ is quality of a link between the node $N_i$ and the node $N_j$ in the deployed network, d() is a function for calculating a distance, $| \cdot |$ is the number of elements in a set, and $k_j$ is a weight, $k_j \geq 0$.

## Claims

1. An apparatus for wireless network deployment, comprising:

> a first storage unit configured to store planned network information;

a second storage unit configured to store deployed network information;
a deployment node selecting unit configured to select a node needing to be currently deployed according to the planned network information and the deployed network information;
a deployment quality calculating unit configured to calculate deployment quality of the node needing to be currently deployed at multiple test positions; and
a deployment position selecting unit configured to select a test position of highest deployment quality as a deployment position of the node needing to be currently deployed.

2. The apparatus according to claim 1, wherein,
the planned network information is information on a planned network and comprises a node address, a deployment position and connection relationships;
and the deployed network information is information on a deployed node and comprises a node address, a deployment position and connection relationships.

3. The apparatus according to claim 1, wherein the deployment node selecting unit comprises:

a calculating module configured to calculate planned connection levels between each undeployed node and all deployed nodes; and
a selecting module configured to select a node of a maximum planned connection level with the deployed nodes from undeployed nodes as the node needing to be currently deployed.

4. The apparatus according to claim 3, wherein the planned connection level refers to a sum of the number of nodes in all the deployed nodes having a planned connection relationship with each undeployed node.

5. The apparatus according to claim 1, wherein the deployment quality is inversely proportional to a difference between link quality in a planned network and link quality in a deployed network, and/or the deployment quality is proportional to the number of deployed neighboring nodes in planned neighboring nodes.

6. The apparatus according to claim 5, wherein the deployment quality calculating unit calculates the deployment quality of the node needing to be currently deployed at each test position according to a formula below:

$$Q_i = \frac{\left|B_i \bigcap B_i^{'}\right|}{\sum_{N_j \in N^{'}} k_j d(L_{i,j}, L_{i,j}^{'})};$$

where, $Q_i$ is deployment quality of a node $N_i$ at a test position, $N'$ is a set of all the deployed nodes, $B_i$ is a set of neighboring nodes of the node $N_i$ in the planned network, $B_i'$ is a set of neighboring nodes of the node $N_i$ in the deployed network, $L_{i,j}$ is quality of a link between the node $N_i$ and a node $N_j$ in the planned network, $L_{i,j}'$ is quality of a link between the node $N_i$ and the node $N_j$ in the deployed network, d() is a function for calculating a distance, | · | is the number of elements in a set, and $k_j$ is a weight, $k_j \geq 0$.

7. The apparatus according to claim 6, wherein the apparatus further comprises:

a third storage unit configured to store a calculation result of the deployment quality calculating unit, the calculation result comprising: an address of the node needing to be currently deployed, multiple test positions corresponding to the node needing to be currently deployed, and deployment quality of the node needing to be currently deployed at each test position.

8. A terminal device comprising the apparatus as claimed in claim 1.

9. A method for wireless network deployment, comprising:

selecting a node needing to be currently deployed according to planned network information and deployed network information;
calculating deployment quality of the node needing to be currently deployed at multiple test positions; and
selecting a test position of highest deployment quality as a deployment position of the node needing to be currently deployed.

10. The method according to claim 9, wherein the planned network information is information on a planned network and includes a node address, a deployment position and connection relationships; and the deployed network information is information on a deployed node and includes a node address, a deployment position and connection relationships.

11. The method according to claim 9, wherein the calculating deployment quality of the node needing to be currently deployed at multiple test positions includes:

calculating planned connection levels between each undeployed node and all deployed nodes; and
selecting a node of a maximum planned connection level with the deployed nodes from undeployed nodes as the node needing to be currently deployed.

12. The method according to claim 11, wherein the planned connection level refers to a sum of the number of nodes in all the deployed nodes having a planned connection relationship with each undeployed node.

13. The method according to claim 9, wherein the deployment quality is inversely proportional to a difference between link quality in a planned network and link quality in a deployed network, and/or the deployment quality is proportional to the number of deployed neighboring nodes in planned neighboring nodes.

14. The method according to claim 13, wherein the deployment quality of the node needing to be currently deployed at each test position is calculated according to a formula below:

$$Q_i = \frac{\left| B_i \bigcap B_i^{'} \right|}{\sum_{N_j \in N'} k_j d(L_{i,j}, L_{i,j}^{'})};$$

where, $Q_i$ is deployment quality of a node $N_i$ at a test position, $N'$ is a set of all the deployed nodes, $B_i$ is a set of neighboring nodes of the node $N_i$ in the planned network, $B_i'$ is a set of neighboring nodes of the node $N_i$ in the deployed network, $L_{i,j}$ is quality of a link between the node $N_i$ and a node $N_j$ in the planned network, $L_{i,j}'$ is quality of a link between the node $N_i$ and the node $N_j$ in the deployed network, d() is a function for calculating a distance, $| \cdot |$ is the number of elements in a set, and $k_j$ is a weight, $k_j \geq 0$.

100

an apparatus for wireless
network deployment

first storage unit 101

second storage
unit 102

deployment node
selecting unit 103

deployment quality
calculating unit 104

third storage unit 106

deployment position
selecting unit 105

FIG. 1

1

0

2

4 P4

3

5

FIG. 2

FIG. 3

103

deployment node selecting unit

calculating module — 401

selecting module — 402

FIG. 4

$L'_{4,2}$   $P_4$

$L'_{4,3}$

FIG. 5

FIG. 6

$P_4^1$
$Q_4^1 = 0.5$

$P_4^2$
$Q_4^2 = 0.2$

start

701
planned information and deployed information are acquired

702
a node needing to be deployed is selected

deployment quality of the node is evaluated at multiple test positions

703
deployment quality of the node at a certain position is calculated

704
information on deployment quality is stored

the evaluation of deployment quality of the node at multiple test positions is terminated

705
a deployment position is selected for the node

end

FIG. 7

800

terminal device

100

apparatus for wireless network deployment

FIG. 8

900

terminal device

901

903

904 — Input unit

Communication Module
(transmitter/receiver)

Memory

Buffer

Central
Processing
Unit

Application/
Funtion

902

Data

905

Audio
Processing
Unit

Drive Program

Display

906

Power Supply

907

FIG. 9

1001

a node needing to be currently deployed is selected according to planned network information and deployed network information

1002

deployment quality of the node needing to be currently deployed at multiple test positions is calculated

1003

a test position of highest deployment quality is selected as a deployment position of the node needing to be currently deployed

FIG. 10

Europäisches Patentamt
European Patent Office
Office européen des brevets

# EUROPEAN SEARCH REPORT

Application Number

EP 17 17 0634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/045971 A1 (TELECOM ITALIA SPA [IT]; PIRELLI & C SPA [IT]; COLERI ERGEN SINEM [US]) 29 April 2010 (2010-04-29) | 1-3,8-11 | INV. H04W16/20 H04W24/02 |
| A | * page 8, line 15 - line 23 * <br> * page 10, line 5 - line 7 * <br> * page 11, line 2 - line 3 * <br> * page 19, line 16 - line 17 * <br> * page 20, line 26 - page 21, line 1 * <br> * figure 2 * | 4-7, 12-14 | |
| X | US 2010/278072 A1 (ROBINSON JOSHUA P [US] ET AL) 4 November 2010 (2010-11-04) | 1-3,8-11 | |
| A | * paragraph [0030] * <br> * figure 3 * | 4-7, 12-14 | |
| X | US 2013/130732 A1 (SHEU SHIANN-TSONG [TW] ET AL) 23 May 2013 (2013-05-23) | 1,3,8,9, 11 | |
| A | * paragraph [0052] * <br> * figure 3 * <br> * paragraph [0056] * <br> * figure 5 * | 2,4-7, 10,12-14 | |
| A | ANDREAS KRAUSE ET AL: "Near-optimal sensor placements", INFORMATION PROCESSING IN SENSOR NETWORKS, 2006. IPSN 2006. THE FIFTH INTERNATIONAL CONFERENCE ON NASHVILLE, TN, USA 19-21 APRIL 2006, PISCATAWAY, NJ, USA,IEEE, 2 PENN PLAZA, SUITE 701 NEW YORK NY 10121-0701 USA, 19 April 2006 (2006-04-19), pages 2-10, XP058291143, DOI: 10.1145/1127777.1127782 ISBN: 978-1-59593-334-8 * paragraph [02.3] * | 1,8,9 | TECHNICAL FIELDS SEARCHED (IPC) H04W |

The present search report has been drawn up for all claims

| Place of search | Date of completion of the search | Examiner |
|---|---|---|
| Berlin | 24 October 2017 | Farese, Luca |

EPO FORM 1503 03.82 (P04C01)

## ANNEX TO THE EUROPEAN SEARCH REPORT
## ON EUROPEAN PATENT APPLICATION NO.

EP 17 17 0634

This annex lists the patent family members relating to the patent documents cited in  the above-mentioned European search report.
The members are as contained in the European Patent Office EDP file on
The European Patent Office is in no way liable for these particulars which are merely given for the purpose of information.

24-10-2017

| Patent document cited in search report | Publication date | Patent family member(s) | Publication date |
|---|---|---|---|
| WO 2010045971 A1 | 29-04-2010 | NONE | |
| US 2010278072 A1 | 04-11-2010 | NONE | |
| US 2013130732 A1 | 23-05-2013 | TW    201322801 A<br>US    2013130732 A1 | 01-06-2013<br>23-05-2013 |

EPO FORM P0459

For more details about this annex : see Official Journal of the European Patent Office, No. 12/82